**Europäisches Patentamt**

**European Patent Office**

**Office européen des brevets**

(19)

(11) Veröffentlichungsnummer: **0 095 624**
**B1**

(12) # EUROPÄISCHE PATENTSCHRIFT

(45) Veröffentlichungstag der Patentschrift:
**29.01.86**

(21) Anmeldenummer: **83104692.5**

(22) Anmeldetag: **13.05.83**

(51) Int. Cl.⁴: **C 05 G 3/00**

(54) **Ionenaustauscher-Düngemittel und Verfahren zur gleichmässigen und langfristigen Versorgung von Pflanzen mit Nährstoffen.**

(30) Priorität: **26.05.82 DE 3219659**

(43) Veröffentlichungstag der Anmeldung:
**07.12.83 Patentblatt 83/49**

(45) Bekanntmachung des Hinweises auf die Patenterteilung:
**29.01.86 Patentblatt 86/5**

(84) Benannte Vertragsstaaten:
**CH DE FR GB IT LI**

(56) Entgegenhaltungen:
**DE - A - 2 819 871**

**CHEMISCHES ZENTRALLBLATT, Band 138, Nr. 14, 1967, Zusammenfassung Nr. 3238;**

(73) Patentinhaber: **BAYER AG, Konzernverwaltung RP Patentabteilung, D-5090 Leverkusen 1 Bayerwerk (DE)**

(72) Erfinder: **Heller, Harold, Dr., Hahnenweg 4, D-5000 Köln 80 (DE)**
Erfinder: **Schäpel, Dietmar, Dr., Johanniterstrasse 15, D-5000 Köln 80 (DE)**

**Beschreibung**

Die Erfindung betrifft ein Verfahren zur langfristigen und gleichmässigen Versorgung von Pflanzen mit Nährstoffen mittels nährstoffbeladener Kunstharz-Ionenaustauscher und in Polyurethane eingebetteter Mineraldünger. Die Erfindung betrifft ferner Düngemittel aus nährstoffbeladenen Kunstharz-Ionenaustauschern und in Polyurethane eingebetteten Mineraldüngern.

Wegen ihrer vorteilhaften Eigenschaften werden nährstoffbeladene Kunstharz-Ionenaustauscher heute in grossem Umfang als langfristig wirkende Düngemittel angewendet, insbesondere bei der Pflege von Zierpflanzen in Hydrokulturen. Gebräuchlich sind vor allem solche Mischungen aus Kationen- und Anionenaustauschharzen, die ausser den 2-wertigen Nährstoffionen Calcium, Magnesium und Sulfat alle wichtigen Makro- und Mikropflanzennährstoffe enthalten. Die 2-wertigen Nährstoffionen Calcium, Magnesium und Sulfat kommen in den meisten gebräuchlichen Giesswässern in ausreichender Menge vor, so dass sie den Pflanzen nicht gesondert zugeführt zu werden brauchen (vgl. E. Hanselmann: Hydrokultur, Verlag Eugen Ulmer, Stuttgart, 1981, Seite 40 u.f.).

Schwierigkeiten mit diesen nährstoffbeladenen Kunstharz-Ionenaustauschern treten jedoch bei deren Verwendung zusammen mit weichen Giesswässern, z.B. vollständig oder partiell enthärteten oder natürlichen weichen Giesswässern auf. Diese beruhen darauf, dass die Pflanzen in diesen weichen Wässern nicht mehr die erforderlichen Mengen an besagten 2-wertigen Nährstoffionen, insbesondere Calciumionen, vorfinden und/oder dass in diesen weichen Giesswässern die gleichmässige Freisetzung der Nährstoffionen vom Ionenaustauscherdünger nicht mehr gewährleistet ist. Die Folge der Schwierigkeiten sind Mangelerscheinungen an den in bzw. mit diesen weichen Giesswässern gezogenen Pflanzen. Die Mangelerscheinungen machen sich in reduziertem Wachstum, Minderung der Blühfreudigkeit, verringertem Ernteertrag sowie spezifischen Nährstoffmangelerscheinungen bemerkbar.

Zur Behebung dieser Schwierigkeiten ist empfohlen worden, dem Giesswasser laufend geringe Mengen an Calciumsulfat zuzusetzen oder eine Mischung nährstoffbeladener Ionenaustauscher mit einem grossen Überschuss eines mit Calciumionen beladenen Kationenaustauschers anzuwenden (s. E. J. Hewitt: Sand and Water Culture Method used in the study of plant nutrition, Commonwealth Agricultural Bureaux, Technical Communication No. 22, 2nd Edition, 1966, Seite 63, u.f.). Die erste Methode bedingt jedoch einen unerwünschten Mehraufwand, insbesondere hinsichtlich der analytischen Kontrolle der Nährstofflösungszusammensetzung, während die zweite Methode, bedingt durch die relativ hohen Preise der Ionenaustauscherharze, das ganze Verfahren unwirtschaftlich macht.

Weiterhin wurde die Verwendung von Mischungen aus Ionenaustauscherdüngern und Gips zur allgemeinen Verbesserung des Pflanzenwachstums in Hydrokulturen vorgeschlagen (s. DE-Offenlegungsschrift 28 19 871). Diesem Vorschlag liegt die Annahme zugrunde, dass ein reichlicher Gipszusatz einen geeigneten Salzvorrat darstellt, der nur langsam in Lösung geht und deshalb geeignet ist, die Freisetzung der Nährstoffe von den Ionenaustauschern — insbesondere bei Anwendung salzarmer Giesswässer — über einen langen Zeitraum zu verstärken. Diese Annahme beruht jedoch auf einem Irrtum, da in Gegenwart von Ionenaustauschern auch schwerlösliche Salze wie Gips rasch aufgelöst werden (s. F. Helfferich, Ion-Exchange, McGraw-Hill Book Comp., New York, 1962, Seiten 226-229 und 295-299), wobei äquivalente Mengen auf dem Ionenaustauscher befindlicher Ionen in Lösung gehen. Im vorliegenden Falle sind das die auf den Ionenaustauscherdünger aufgeladenen Nährsalzionen. Das heisst, durch den Gipszusatz wird zwar der Mangel an 2-wertigen Ionen in der Nährlösung behoben, aber es wird keine langsame Freisetzung der Nährstoffe von den nährstoffbeladenen Ionenaustauschern erreicht. Der Gipszusatz bewirkt vielmehr einen plötzlichen starken Anstieg der Nährstoffkonzentration in der Lösung infolge der schnellen, der verwendeten Gipsmenge entsprechenden Entladung der Ionenaustauscher. Bei salzempfindlichen Pflanzen wie Orchideen, Bromelien, Azaleen, Farnen, sowie allgemein Jungpflanzen, kann diese schnelle Freisetzung der Nährsalze zu Versalzungsschäden führen (vgl. F. Penningsfeld et al. in Hydrokultur und Torfkultur, Seiten 40-42, Ulmer Verlag, Stuttgart, 1966). Mit den in der DE-Offenlegungsschift 30 20 422 für salzarme Giesswässer vorgeschlagenen Gemischen aus mit Nährstoffionen beladenen schwach basischen und schwach sauren Ionenaustauschern eines besonders hohen Beladungsgrades lässt sich ebenfalls der Mangel an 2-wertigen Nährstoffionen in weichen Giesswässern nicht beseitigen, da von diesen Gemischen infolge ihres selektiven Bindungsvermögens für 2-wertige Ionen, insbesondere der schwach sauren Kationenaustauscher für Calcium- und Magnesiumionen, der Gehalt der ohnehin weichen Giesswässer an diesen Ionen noch weiter verringert wird.

Es wurde nun aber gefunden, dass man in weichen Giesswässern den Mangel an 2-wertigen Nährstoffionen, insbesondere an Calcium-, Magnesium- und Sulfationen beheben und gleichzeitig eine gleichmässige Freisetzung der Nährstoffionen von den Ionenaustauscherdüngern erreichen kann, wenn man besagte 2-wertige Nährstoffionen enthaltende anorganische Düngesalze (im folgenden als Mineraldünger bezeichnet) mit Polyurethanen eines bestimmten Wasseraufnahmevermögens umhüllt und die nährstoffbeladenen Kunstharz-Ionenaustauscher gemeinsam mit diesen, mit bestimmten Polyurethanen umhüllten Mineraldüngern einsetzt. Durch das Einhüllen der Mineraldünger in die speziellen Polyurethane wird deren Auflösungsgeschwindigkeit in Gegenwart der Ionenaustauscher in bestimmter Weise eingestellt.

Es ist bekannt, Mineraldünger zur Herabsetzung ihrer Auflösungsgeschwindigkeit und damit zur Verlängerung ihrer Wirkungsdauer mit Kunststoffen zu umhüllen. Durch Auswahl der Hüllsubstanz und die Art des Umhüllungsverfahrens wurde versucht, die Wirkungsdauer der umhüllten Mineraldünger ihrem Verwendungszweck anzupassen. Die Umhüllung wurde sowohl durch Verkapselung mit als auch durch Einbetten (Dispergieren) in den Hüllsubstanzen vorgenommen. Die Verfahren zur Herstellung der umhüllten Mineraldünger sind jedoch technisch kompliziert und kostspielig (s. z. B. R. Powell: Controlled Released Fertilizers, Noyes Development Corporation, Parkridge N.J., 1968; R.A. Hendrie, Granulated Fertilizers, Noyes Data Corporation, Parkridge N.J., 1976). Deshalb haben diese umhüllten Mineraldünger, obwohl sie einige wesentliche Vorteile aufweisen, bislang nur in begrenztem Umfang in Teilgebieten des Gartenbaus Anwendung gefunden (s. E.S. Sharma in Scientia Horticulturae 11 (1979), Seiten 107-129).

In der US-Patentschrift 33 73 009 werden z.B. als Pflanzenwachstumsmedien geeignete Schaumstoffe beschrieben, die aus einem wasserunlöslichen, zumindest teilweise offenporigen Matrixmaterial auf Polyurethanbasis bestehen, in welches als Pflanzennährstoffe anorganische Düngesalze beschränkter Wasserlöslichkeit und mit Nitrationen beladene Anionenaustauscher eingebettet sind. Diese Pflanzennährstoffe enthaltenden Polyurethan-Schaumstoffe sind zwar als grossstückige, inerte Materialien für die erdelose Pflanzenanzucht, nicht aber als universell anwendbare Düngemittel, geeignet, weil die Abgabe der Nährstoffe aus diesen Polyurethan-Schäumen bei deren Anwendung als Düngemittel zu stark diffusionsbehindert ist.

In der DE-Offenlegungsschrift 25 21 277 werden speziell kovalent vernetzte Polyurethan-Polyharnstoff-Hydrogele allgemein zum Einbetten von Pflanzennährstoffen und Düngemitteln empfohlen. In der DE-Offenlegungsschrift 30 31 893 wird die Verwendung dieser Hydrogele zum Einbetten von nährstoffbeladenen Ionenaustauschern und gegebenenfalls freien oder mit einer Hüllsubstanz überzogenen Mineraldüngern beschrieben. Es hat sich jedoch gezeigt, dass mit diesen Ionenaustauscherdünger und gegebenenfalls umhüllte Mineraldünger enthaltenden Hydrogelen das Problem, bei Verwendung weicher Giesswässer den Mangel an 2-wertigen Nährstoffionen zu beheben und gleichzeitig eine gleichmässige Freisetzung der Nährstoffionen vom Ionenaustauscher zu erreichen, nicht lösbar ist. Zum einen wird die Strukturstabilität der Hydrogele durch eingegelte freie Mineraldünger stark herabgesetzt. Dies macht sich insbesondere bei ihrer Anwendung in Hydrokulturen bemerkbar. Zum anderen diffundieren die Mineraldünger, je nachdem, ob sie leichter oder schwerer löslich sind, entweder zu schnell oder zu langsam aus dem Hydrogel. Die zu langsame Diffusion führt zu einer zu stark verzögerten Nährstoffabgabe; die zu schnelle Diffusion hat dagegen folgende Nachteile: Bei der Anwendung im Freiland werden die freigesetzten Nährstoffe zum grössten Teil in den Unterboden ausgewaschen und gehen damit verloren; bei der Anwendung bei der in der Hydrokultur weitverbreiteten Anstautechnik treten leicht überhöhte Salzkonzentrationen in der Nährlösung auf, die zu Versalzungsschäden an den Pflanzen führen können.

Es wurde nun gefunden, dass man die Aufgabe, den Mangel an 2-wertigen Nährstoffionen bei Verwendung weicher Giesswässer zu beseitigen und gleichzeitig eine gleichmässige Freisetzung der Nährstoffionen vom Kunstharz-Ionenaustauscher zu erreichen, dadurch lösen kann, dass man die Mineraldünger auf eine Korngrösse < 500 μm zerkleinert und diese zerkleinerten Mineraldünger in Abhängigkeit von ihrer Wasserlöslichkeit mit einem Polyurethan eines bestimmten Wasseraufnahmevermögens umhüllt und dabei das Wasseraufnahmevermögen des Polyurethans der Wasserlöslichkeit des zu umhüllenden Mineraldüngers in der Weise anpasst, dass die wenig löslichen Mineraldünger mit Polyurethanen mit hohem Wasseraufnahmevermögen und die leicht löslichen Mineraldünger mit Polyurethanen mit geringerem Wasseraufnahmevermögen umhüllt werden.

Die Erfindung betrifft daher ein Verfahren zur langfristigen und gleichmässigen Versorgung von Pflanzen mit Nährstoffen durch Zugabe von nährstoffbeladenen Kunstharz-Ionenaustauschern und Mineraldüngern zum Kulturmedium, das dadurch gekennzeichnet ist, dass man die nährstoffbeladenen Kunstharz-Ionenaustauscher gemeinsam mit Mineraldüngern einer Korngrösse < 500 μm, vorzugsweise < 100 μm, besonders bevorzugt < 50 μm, einsetzt, die mit massiven Polyurethanen eines bestimmten, auf die Wasserlöslichkeit (WL) des Mineraldüngers in folgender Weise abgestimmten Wasseraufnahmevermögens (WA) umhüllt wurden:

Für Mineraldünger einer WL (20° C) < 3 g/l werden Polyurethane eines WA 25-60 g Wasser/100 g Polyurethan verwendet,

für Mineraldünger einer WL (20° C) > 3 g/l Polyurethane eines WA 0,5-30 g Wasser/100 g Polyurethan.

Vorzugsweise sind die Wasserlöslichkeit (WL) des Mineraldüngers und das Wasseraufnahmevermögen (WA) des zum Umhüllen des Mineraldüngers zu verwendenden massiven Polyurethans in folgender Weise aufeinander abgestimmt:

Für Mineraldünger einer WL (20° C) < 3 g/l werden Polyurethane eines WA 30-50 g Wasser/100 g Polyurethan verwendet,

für Mineraldünger einer WL (20° C) > 3 g/l Polyurethane eines WA 0,5-20 g Wasser/100 g Polyurethan.

Besonders bevorzugt sind die Wasserlöslichkeit (WL) des Mineraldüngers und das Wasseraufnahmevermögen (WA) des zum Umhüllen des Mineraldüngers zu verwendenden massiven Polyurethans in folgender Weise aufeinander abgestimmt:

Für Mineraldünger einer WL (20° C) < 3 g/l werden Polyurethane eines WA 35-45 g Wasser/100 g Polyurethan verwendet,

für Mineraldünger einer WL (20° C) > 3 g/l Po-

lyurethane eines WA 0,5-15 g Wasser/100 g Polyurethan.

Die Mineraldünger werden mit einer solchen Menge an massivem Polyurethan des bestimmten Wasseraufnahmevermögens umhüllt, dass das Gewichtsverhältnis Mineraldünger (wasserfrei)/Polyurethan 1:9 bis 1:0,25, vorzugsweise 1:6 bis 1:1,5 beträgt.

Die nährstoffbeladenen Ionenaustauscher und die mit den massiven Polyurethanen eines bestimmten, auf die Wasserlöslichkeit der Mineraldünger abgestimmten Wasseraufnahmevermögens umhüllten Mineraldünger können den Kulturmedien getrennt oder in Form von vorgefertigten Mischungen zugesetzt werden.

Nährstoffbeladene Kunstharz-Ionenaustauscher und mit den Polyurethanen des bestimmten Wasseraufnahmevermögens umhüllte Mineraldünger werden in solchen Mengenverhältnissen eingesetzt, dass die Menge an Mineraldünger 25-300 Äquivalent-%, vorzugsweise 75-150 Äquivalent-%, bezogen auf die Summe an sauren und basischen Gruppen in den nährstoffbeladenen Ionenaustauschern beträgt. (Mineraldüngermenge in Äquivalenten = Summe aus den im Mineraldünger enthaltenen Kationenäquivalenten (eq$^+$) und Anionenäquivalenten (eq$^-$)).

Die Mischungen aus nährstoffbeladenen Kunstharz-Ionenaustauschern und mit massiven Polyurethanen des bestimmten Wasseraufnahmevermögens umhüllten Mineraldüngern können durch mechanisches Abmischen der perlförmigen (granulierten) nährstoffbeladenen Ionenaustauscher mit den zu vergleichbarer Korngrösse granulierten umhüllten Mineraldüngern hergestellt werden. Eine spezielle, besonders bevorzugte Ausführungsform der erfindungsgemässen Mischungen wird dadurch erhalten, dass man die nährstoffbeladenen Ionenaustauscher und Mineraldünger gemeinsam mit den massiven Polyurethanen des bestimmten Wasseraufnahmevermögens umhüllt.

In dieser bevorzugten Ausführungsform der erfindungsgemässen Mischungen beträgt das Gewichtsverhältnis umhüllte Feststoffe (= Summe aus Ionenaustauscher plus Mineraldünger)/Polyurethan 1:0,5 bis 1:6, vorzugsweise 1:0,8 bis 1:3.

Das Umhüllen der Mineraldünger mit den massiven Polyurethanen eines bestimmten, auf die Wasserlöslichkeit des Mineraldüngers abgestimmten Wasseraufnahmevermögens kann nach an sich bekannten Verfahren, z.B. durch Verkapselung oder durch Einbetten vorgenommen werden.

Die Erfindung betrifft ferner Düngemittel zur langfristigen und gleichmässigen Versorgung von Pflanzen mit Nährstoffionen, die Mischungen aus nährstoffbeladenen Kunstharz-Ionenaustauschern und Mineraldüngern der Korngrösse <500 μm enthalten, wobei die Mineraldünger mit massiven Polyurethanen eines bestimmten, auf die Wasserlöslichkeit (WL) des Mineraldüngers in folgender Weise abgestimmten Wasseraufnahmevermögens (WA) umhüllt sind:

Für Mineraldünger einer WL (20°C) <3 g/l werden Polyurethane eines WA 25-60 g Wasser/100 g Polyurethan verwendet, für Mineraldünger einer WL (20°C) >3 g/l Polyurethane eines WA 0,5-30 g Wasser/100 g Polyurethan.

Bevorzugt sind solche Düngemittel, die Mischungen enthalten, die durch gemeinsames Umhüllen von nährstoffbeladenen Kunstharz-Ionenaustauschern und Mineraldüngern mit den massiven Polyurethanen des bestimmten Wasseraufnahmevermögens hergestellt wurden. Die Menge an Mineraldünger in den erfindungsgemässen Düngemitteln beträgt 25-300 Äquivalent-%, vorzugsweise 75-150 Äquivalent-%, bezogen auf die Summe an sauren und basischen Gruppen der in der Mischung enthaltenen nährstoffbeladenen Kunstharz-Ionenaustauscher.

In den erfingungsgemässen Düngemitteln, die durch gemeinsames Umhüllen von nährstoffbeladenen Kunstharz-Ionenaustauschern und Mineraldüngern mit den massiven Polyurethanen des bestimmten Wasseraufnahmevermögens hergestellt wurden, beträgt das Gewichtsverhältnis Ionenaustauscher + Mineraldünger/Polyurethan 1:0,5 bis 1:6, vorzugsweise 1:0,8 bis 1:3.

Mit Pflanzennährstoffen beladene Kunstharz-Ionenaustauscher sind bekannt; sie sind z.B. in der US-Patentschrift 30 82 074, in der DE-Patentschrift 23 38 182 und bei E.J. Hewitt, loc. cit., Seite 61 u.f. beschrieben.

Die Kunstharz-Ionenaustauscher können mikroporös oder makroporös sein und es kann sich um Polymerisations- oder Kondensationsharze handeln. In den erfindungsgemässen Düngemittelkombinationen verwendbare Kunstharz-Ionenaustauscher sind die bekannten schwach-basischen, mittel-basischen und stark-basischen, primäre, sekundäre und/oder tertiäre Aminogruppen und/oder quaternäre Ammonium-, Sulfonium- oder Phosphoniumgruppen aufweisenden Anionenaustauschharze, die schwach-sauren, mittelsauren und stark-sauren, phenolische Hydroxylgruppen, Carbonsäure-, Phosphinsäure-, Phosphonsäure- und/oder Sulfonsäuregruppen aufweisenden Kationenaustauschharze sowie die Chelatkomplexe bildenden, z.B. Aminocarbonsäure- oder Aminophosphonsäuregruppen aufweisenden Chelatharze.

Ionenaustauscher der genannten Art sind bekannt. Sie und ihre Herstellung werden z.B. beschrieben in F. Helfferich, Ion-Exchange, loc. cit., Seiten 26 bis 71 und Ullmanns Enzyklopädie der technischen Chemie, 4. Auflage, Band 13, 1977, Seiten 295 bis 309. Chelatharze mit Aminophosphonsäuregruppen und ihre Herstellung werden z.B. in der GB-Patentschrift 859 834 beschrieben.

Die Beladung der Ionenaustauscher mit Nährstoffen erfolgt nach bekannten, z.B. nach den in der US-Patentschrift 3 082 074, der DE-Patentschrift 2 338 182 oder der DE-Offenlegungsschrift 3 020 422 beschriebenen Verfahren.

Als nährstoffbeladene Ionenaustauscher werden vorzugsweise Gemische aus mit Nährstoffanionen beladenen Anionenaustauschern und mit Nährstoffkationen beladenen Kationenaustauschern verwendet. In den Ionenaustauscher-Gemischen wird das Verhältnis beladener Anionenaustauscher/beladener Kationenaustauscher vorteilhaft so gewählt, dass die Menge an sauren Gruppen 10 bis 90%, vorzugsweise 10 bis 50%, bezogen auf die Summe der sauren und basischen Gruppen des Gemisches, beträgt.

Die zum Umhüllen der Mineraldünger erfindungsgemäss zu verwendenden Polyurethane mit dem bestimmten, der Wasserlöslickheit des Mineraldüngers angepassten Wasseraufnahmevermögen werden in an sich bekannter Weise durch Umsetzung von Di- und/oder Polyisocyanaten mit höhermolekularen, mindestens zwei gegenüber Isocyanaten reaktionsfähigen Gruppen aufweisenden Verbindungen und gegebenenfalls niedermolekularen Kettenverlängerern bzw. Vernetzern hergestellt, wobei man den Aufbau der höhermolekularen Verbindung und gegebenenfalls die Menge des Vernetzers entsprechend der Wasserlöslichkeit des einzuhüllenden Salzes wählt.

Unter massiven Polyurethanen sind im Rahmen der Erfindung feste Polyurethane zu verstehen, die keine Zellstruktur aufweisen und die weder Gele sind, noch solche zu bilden vermögen.

Als Ausgangskomponenten bei der Herstellung der Polyurethane kommen aliphatische, cycloaliphatische, araliphatische, aromatische und heterocyclishe Polyisocyanate in Betracht, wie sie z. B. von W. Siefken in Liebig's Annalen der Chemie, Band 562, Seiten 75 bis 136, beschrieben werden.

Bevorzugte Polyisocyanate sind im allgemeinen die verschiedenen Toluylendiisocyanate und Polymethylenpolyphenylpolyisocyanate sowie Gemische aus beiden Isocyanat-Arten.

Unter den Polymethylenpolyphenylpolyisocyanaten sind diejenigen Arten bevorzugt, die mindestens 80 Gewichtsprozent Diisocyanatodiphenylmethan enthalten, wobei der Rest dieses Polyisocyanats aus nahe verwandten Polyisocyanaten höheren Molekulargewichts und höherer Funktionalität besteht.

Diese Polyisocyanat-Art umfasst daher
a)    Polymethylenpolyphenylpolyisocyanate, welche einen Gehalt an Diisocyanatodiphenylmethan in dem obigen Bereich aufweisen und welche sich durch Phosgenierung von Polyamingemischen ableiten, die durch saure Kondensation von Anilin und Formaldehyd erhalten werden; und

Polyisocyanate mit einem Gehalt an diisocyanatodiphenylmethan in dem obigen Bereich, welche durch chemische Modifizierung von Diisocyanatodiphenylmethan selbst erhalten werden und welche hier als «modifizierte» Diisocyanatodiphenylmethane bezeichnet sind.

Die modifizierten Diisocyanatodiphenylmethane umfassen Diisocyanatodiphenylmethan, und zwar sowohl das 4,4'-Isomere als auch Gemische des 4,4'-Isomeren und des 2,4'-Isomeren und/oder 2,2'-Isomeren, welche zur Umwandlung eines untergeordneten Anteils, gewöhnlich weniger als 25 Gew.-% des Ausgangsmaterials, in eine künstliche Abwandlung dieses Ausgangsmaterials behandelt worden sind. Beispielsweise kann das Polymethylenpolyphenylpolyisocyanat ein Diisocyanatodiphenylmethan sein, welches gemäss der deutschen Offenlegungsschrift 1 618 380 in eine stabile Flüssigkeit bei Temperaturen von etwa 20° C umgewandelt worden ist.

Ausgangskomponenten für die Herstellung der Polyurethane sind ferner Verbindungen mit mindestens zwei gegenüber Isocyanaten reaktionsfähigen Wasserstoffatomen mit einem Molekulargewicht in der Regel von 400-10 000. Hierunter versteht man neben Aminogruppen, Thiolgruppen oder Carboxylgruppen aufweisenden Verbindungen vorzugsweise Polyhydroxylverbindungen, insbesondere zwei bis acht Hydroxylgruppen aufweisende Verbindungen, speziell solche vom Molekulargewicht 800-10 000, vorzugsweise 1000 bis 6000 z. B. mindestens zwei, in der Regel 2 bis 8, vorzugsweise aber 2 bis 4, Hydroxylgruppen aufweisende Polyether.

Gegebenenfalls weitere Ausgangskomponenten für die Polyurethane sind Verbindungen mit mindestens zwei gegenüber Isocyanaten reaktionsfähigen Wasserstoffatomen von einem Molekulargewicht 62-400. Auch in diesem Fall versteht man hierunter Hydroxylgruppen und/oder Aminogruppen aufweisende Verbindungen, die als Kettenverlängerungsmittel oder Vernetzungsmittel dienen. Diese Verbindungen weisen in der Regel 2 bis 8 gegenüber Isocyanaten reaktionsfähige Wasserstoffatome auf, vorzugsweise 2 oder 3 reaktionsfähige Wasserstoffatome.

Als Beispiele für derartige Verbindungen seien genannt: Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethylcyclohexan, 2-Methyl-1,3-propandiol, Glyzerin, Trimethylolpropan, Hexantriol-(1,2,6), Trimethylolethan, Pentaerythrit, Chinit, Mannit und Sorbit, Diethylenglykol, Triethylenglykol, Dipropylenglykol und Ethanolamin.

Zur Herstellung der Polyurethane, die ein Wasseraufnahmevermögen (WA) von 25 bis 60 g Wasser/100 g Polyurethan aufweisen, werden Polyether verwendet, deren Gehalt an Ethylenoxidgruppen 25 bis 60 Gew.-% beträgt, bezogen auf das Gewicht des Polyethers. Diese Polyether können gegebenenfalls vernetzt sein. Die Menge an Vernetzer kann bis zu 7 Gew.-% betragen, bezogen auf das Gewicht des Polyethers.

Zur Herstellung der Polyurethane, die ein Wasseraufnahmevermögen (WA) von 0,5 bis 30 g Wasser/100 g Polyurethan aufweisen, werden Polyether verwendet, deren Gehalt an Ethylenoxidgruppen 0 bis 30 Gew.-% beträgt, bezogen auf das Gewicht des Polyethers. Diese Polyether können gegebenenfalls vernetzt sein. Die Menge an Vernetzer kann bis zu 10 Gew.-% betragen, bezogen auf das Gewicht des Polyethers.

In dem erfindungsgemässen Verfahren bzw. in den erfindungsgemässen Düngemitteln sind die einwertigen Makronährstoffionen, wie Nitrat-, Dihydrogenphosphat-, Ammonium- und Kaliumionen vorzugsweise an die Kunstharz-Ionenaustauscher gebunden, während die 2- und höherwertigen Makronährstoffionen, wie Calcium-, Magnesium-, Sulfat- und Phosphationen vorzugsweise in den mit massiven Polyurethanen umhüllten Mineraldüngern enthalten sind. Mikronährstoffe wie Eisen, Mangan, Kupfer, Zink, Kobalt können als Kationen an Kationenaustauschharze oder als anionische Chelatkomplexe an Anionenaustauschharze gebunden oder in den Polyurethan-umhüllten Mineraldüngern vorliegen. Vorzugsweise sind sie als anionische Chelatkomplexe an Anionenaustauscher gebunden. Mikronährstoffe wie Molybdän und Bor sind bevorzugt als Molybdat bzw. Borat an Anionenaustauschharze gebunden oder im Polyurethan-umhüllten Mineraldünger enthalten.

Als Mineraldünger, die mit den massiven Polyurethanen des bestimmten Wasseraufnahmevermögens umhüllt sein können, kommen alle natürlichen und künstlichen (synthetischen) Makro- und/oder Mikronährstoffe enthaltenden mineralischen Dünger in Betracht, insbesondere Calcium-, Magnesium-, Sulfat- und Phosphatdünger. Dabei kann es sich um Ein- und Mehrnährstoffdünger handeln, die einzeln oder als Gemisch eingesetzt werden können. Als Beispiele seien folgende Dünger genannt: Calciumcarbonat, Dolomit, Calciumsulfat, Calciumnitrat, Calciumphosphat, Kaliummagnesiumphosphat, Magnesiumphosphat, Magnesiumammoniumphosphat, Kaliummetaphosphat, Magnesiumcarbonat, Magnesiumsilikat, Magnesiumoxid, Magnesiumnitrat, Magnesiumsulfat, Kaliumsulfat, Ammoniumphosphat, Ammoniumsulfat sowie Phosphate, Carbonate, Sulfate, Oxide oder Silikate der Mikronährstoffe Eisen, Kupfer, Mangan, Kobalt und Zink, Molybdänoxid, Ammoniummolybdat, Borax, Calcium sowie Magnesiummetaborat und die verschiedenen Handelsformen dieser Dünger (s. z. B. A. Finck, Dünger und Düngung, Verlag Chemie, Weinheim, 1979, Kapitel 2+3). Bevorzugte Mineraldünger sind Calciumcarbonat, Dolomit, Calciumsulfat, Magnesiumammoniumphosphat, Magnesiumsulfat und Calciumphosphat.

Das Umhüllen der Mineraldünger bzw. der Mineraldünger und der Kunstharz-Ionenaustauscher mit den speziellen Polyurethanen kann nach den an sich bekannten Methoden der Verkapselung und des Einbettens erfolgen. Dabei kann das Einbetten der Salze nach dem thermoplastischen Verarbeitungsverfahren oder dem Reaktivverfahren erfolgen.

Von den erfindungsgemäss möglichen Herstellungsmethoden unter Verwendung von reaktionsfähigen Gemischen, wie z. B. dem Giess-, Sprüh- oder Reaktionsspritzgiessverfahren, hat sich das Giessverfahren als besonders einfach und wirtschaftlich erwiesen. Hierbei können die erfindungsgemässen Polyurethane in an sich bekannter Weise sowohl nach dem Einstufen- als auch nach dem Prepolymer- oder Semiprepolymer-Verfahren hergestellt werden.

Von den Verfahrensvarianten beim Giessverfahren ist das Einstufenverfahren erfindungsgemäss besonders bevorzugt. In diesem Fall vermischt man höhermolekulare Polyole, Mineraldünger, gegebenenfalls Ionenaustauscher, Vernetzer sowie Füll- und Zusatzstoffe und schliesslich den Katalysator und mischt anschliessend die Isocyanatkomponente hinzu.

Unter den thermoplastischen Verarbeitungsverfahren ist es eine erfindungsgemäss bevorzugte Verfahrensweise, die Mineraldünger direkt bei der Herstellung des Polyurethans, gegebenenfalls im Gemisch mit einer der Ausgangskomponenten, zuzusetzen, beispielsweise in einem Verfahren gemäss DE-Offenlegungsschrift 2 302 564 (= US-Patentschrift 3 963 679), wobei Polyisocyanate und Polyhydroxylverbindungen in einer zweiwelligen Schneckenmaschine kontinuierlich miteinander umgesetzt werden.

Die erfindungsgemässen Düngemittel können zusätzlich zu den nährstoffbeladenen Kunstharz-Ionenaustauschern und den mit den speziellen Polyurethanen umhüllten Mineraldüngern noch Füll- und Zusatzstoffe enthalten. Als Zusatzstoffe seien beispielsweise genannt: Farbstoffe, feste oberflächenaktive Substanzen, pH-stabilisierende Verbindungen, Pflanzenschutzmittel und das Pflanzenwachstum regulierende Stoffe. Als Füllstoffe seien beispielsweise anorganische Füllstoffe wie Titandioxid, Quarzsand, Kaolin, Russ und Mikroglaskugeln und organische Füllstoffe wie Pulver auf Basis von Polystyrol oder Polyvinylchlorid genannt.

Die Anwendung der erfindungsgemässen Düngemittel geschieht nach den in Landwirtschaft und Gartenbau üblichen Methoden. Beispielsweise lassen sich die erfindungsgemässen Düngemittel als Granulate mit dem natürlichen oder synthetischen Substrat vermengen oder durch Umgraben oder Pflügen in den Boden einarbeiten. In Hydrokulturen lassen sich die neuen Düngemittel auch in anderer Form anwenden. So können sie bei den verschiedenen Bewässerungsverfahren mit dem gleichen Erfolg als Granulate wie als Platte(n), Folie(n), Block oder Stab angewendet werden. Bei der Pflege von Zierpflanzen in Hydrokultur können die Granulate z. B. dem inerten Substrat zugemischt oder lose in das Wasserreservoir eingebracht werden. Besonders leicht handhabbar sind bei der Pflege von Einzelpflanzen Kleinbehälter (sog. Nährstoffbatterien) aus Kunststoff oder Beutel aus z. B. Faservlies, in die die Granulate eingefüllt werden können. Auch als Unterlegplatten lassen sich die erfindungsgemässen Düngemittel für die Düngung von Pflanzen in Einzeltöpfen anwenden, und zwar sowohl bei der Pflege von Hydrokulturen als auch von Topfpflanzen in Erde. Die leichte Auswechselbarkeit der handlichen Formstücke nach Erschöpfung der Düngewirkung der Unterlegplatten ist dabei von besonderem Vorteil.

Die Menge, in der die erfindungsgemässen Düngemittel eingesetzt werden, kann in weiten Bereichen schwanken. Sie hängt im wesentlichen vom jeweiligen Nährstoffbedarf der Pflanzen ab. Im allgemeinen betragen die Aufwandmengen zwischen 0,001 und 0,1 dm³ pro dm³ Kulturmedium, vorzugsweise zwischen 0,002 und 0,05 dm³ je dm³ Kulturmedium bei Anwendung granulierten Materials oder — bei Anwendung von Formstücken — zwischen 5 und 100 g je Pflanze, vorzugsweise zwischen 5 und 50 g je Pflanze, bezogen auf die Menge an inkorporierten Ionenaustauschern.

Mit Hilfe des erfindungsgemässen Verfahrens bzw. mit den erfindungsgemässen Düngemitteln wird eine sichere, langfristige Versorgung von Pflanzen mit mineralischen Nährstoffen, die von Ionenaustauschern stark fixiert werden, wie Calcium, Magnesium oder Schwefel, bei gleichzeitigem, langfristigem Angebot aller anderen essentiellen Makro- und Mikronährstoffe über Ionenaustauschharze erreicht, wobei die Ionenaustauschharze gleichzeitig durch ihre puffernde Wirkung stabilisierend auf die Nährstoffkonzentrationen und den pH-Wert der Nährlösung wirken. Die neuen Düngemittel gewährleisten somit ein besonders harmonisches, pflanzenfreundliches Nährstoffangebot.

Durch die gemeinsame Anwendung von nährstoffbeladenen Kunstharz-Ionenaustauschern und mit Polyurethanen eines bestimmten Wasseraufnahmevermögens umhüllten Mineraldüngern lassen sich z. B. auch in Nährlösungen von Hydrokulturen bei Anwendung weicher Giesswässer auf wirtschaftliche Weise langfristig dem Bedarf der Pflanzen entsprechende Nährstoffkonzentrationen einstellen. Nährstoffmangel und Nährstoffüberkonzentrationen und ihre negativen Auswirkungen auf das Pflanzenwachstum werden dabei sicher vermieden. Durch die Anwendung der erfindungsgemässen Düngemittel werden die Nachteile der bekannten Düngungsmethoden für die Hydrokultur von Pflanzen in weichen Giesswässern überwunden.

Die in den nachfolgenden Beispielen für die Mineraldünger verwendete Mengenangabe «Äquivalent-%» bezieht sich auf die Gesamtmenge an sauren und basischen Gruppen des eingesetzten Ionenaustauscherdüngers.

*Beispiel 1*

13,5 g eines handelsüblichen Ionenaustauscherdüngers für Hydrokulturen (Lewatit HD®), der alle essentiellen Makro- und Mikronährstoffe mit Ausnahme von Calcium, Magnesium und Schwefel an ein Ionenaustauschergemisch, bestehend aus einem Kationenaustauschharz und einem Anionenaustauschharz, gebunden enthält, mit einem Gesamtgehalt an sauren und basischen Gruppen von 53 mmol, werden mit 9,3 g Granulat aus Polyurethan-umhülltem Calciumsulfat vermischt.

WL des $CaSO_4 \cdot 2H_2O$ bei 20°C : 2,036 g/dm³; Gehalt an $CaSO_4 \cdot 2H_2O$ im Granulat: 3,2 g = 74,4 mmol ($\frac{1}{2}Ca^{2+} + \frac{1}{2}SO_4^{2-}$) = 140 Äquivalent-%; Gewichtsverhältnis $CaSO_4$/Polyurethan: 1 : 2,5; WA des Polyurethans: 40 g/100 g Polyurethan.

Das Granulat aus Polyurethan-umhülltem Calciumsulfat war wie folgt hergestellt worden:

In einer Mischung aus 50 Teilen Polyether 1, der durch Anlagerung von 80 Gew.-% Propylenoxid und 20 Gew.-% Ethylenoxid an Trimethylolpropan erhalten worden war und eine Hydroxylzahl von 36 aufwies, und 20 Teilen Polyether 2, der durch Anlagerung von 40 Gew.-% Propylenoxid und 60 Gew.-% Ethylenoxid an Glycerin erhalten worden war und eine Hydroxylzahl von 28 aufwies, wurden 51 Teile Calciumsulfat $CaSO_4 \cdot 2H_2O$ (Korngrösse 0,5-50 μm) dispergiert. In diese Dispersion mischte man 4 Teile Butandiol-1,4 und 0,08 Teile Dibutylzinndilaurat. Zu der erhaltenen Mischung wurden 23,8 Teile Tripropylenglykolmodifiziertes 4,4'-Diisocyanatodiphenylmethan (MDI), Isocyanatgehalt 23 Gew.-%, hinzugefügt und intensiv eingemischt. Das Reaktionsgemisch wurde in eine zylindrische Form (Durchmesser: 12 cm) gegossen, wo es innerhalb von 5 Minuten erhärtete. Das entformte Material wurde anschliessend auf eine Korngrösse von 1-5 mm granuliert.

Zur Bestimmung der Nährstofffreisetzung wurde die erhaltene Mischung aus 13,5 g Ionenaustauscherdünger und 9,3 g Granulat aus Polyurethan-umhülltem Calciumsulfat zusammen mit 600 cm³ vollentsalztem Wasser in eine Kunststoffdose gegeben und bei Raumtemperatur ruhig stehen gelassen, um die Bedingungen der Hydrokultur von Pflanzen in Einzelgefässen zu simulieren. Die Wasserphase wurde in Abständen von 3-4 Tagen abgezogen, auf ihren Gehalt an Nitrat untersucht und durch frisches Wasser ersetzt. Nach 7-maligem Abzug des Wassers betrug die freigesetzte Nitratmenge 848 mg, was 41% der im Ionenaustauscherdünger enthaltene Menge entspricht.

(Die Untersuchung wurde auf die Freisetzung von Nitrat beschränkt, weil Vorversuche ergeben hatten, dass die Nitratfreisetzung der für die Langzeitdüngewirkung des Ionenaustauscherdüngers massgebliche Vorgang ist.)

Mit der erhaltenen Mischung aus 13,5 g Ionenaustauscherdünger und 9,3 g Granulat aus Polyurethan-umhülltem Calciumsulfat wird die Nährstoffversorgung einer Pflanze von bis zu 50 cm höhe in einer Hydrokultur auch bei Verwendung von weichem Wasser (Calciumhärte 4° d) für etwa 5 Monate sichergestellt.

Wird bei der Herstellung des Polyurethanumhüllten Calciumsulfates statt des angegebenen Gewichtsverhältnisses $CaSO_4$/Polyurethan ein Gewichtsverhältnis $CaSO_4$/Polyurethan von 1 : 7,5 eingestellt, so erhält man bei der Kombination dieses Polyurethan-umhüllten Calciumsulfates mit dem Ionenaustauscherdünger ein Düngemittel, dass sich besonders für die Versorgung langsam wachsender Hydrokultur-Pflanzen eignet. Wird z. B. ein Gemisch aus 13,5 g des oben genannten Ionenaustauscher-Düngers und 22,2 g Granulat aus diesem Polyurethan-umhüllten Calciumsulfat in das Wasser einer langsam wüchsigen Pflanze (Sukkulente, Orchidee) gegeben, so ist diese auch bei Verwendung von weichem Giesswasser (Calciumhärte 4° dH) für einen Zeitraum von mehr als 6 Monaten mit Nährstoffen versorgt.

*Beispiele 2-5*

Je 13,5 g des in Beispiel 1 beschriebenen nährstoffbeladenen Ionenaustauscherdüngers (Lewatit HD 5®) mit einem Gesamtgehalt an sauren und basischen Gruppen von 53 mmol werden mit den in Tabelle 1 angegebenen Mengen an Granulat 1 oder 2 aus Polyurethan-umhülltem Calciumsulfat vermischt.

*Tabelle 1*

| Beispiel | 2 | 3 | 4 | 5 |
|---|---|---|---|---|
| | Gehalte der Düngemittel | | | |
| Ionenaustauscherdünger [g] | 13,5 | 13,5 | 13,5 | 13,5 |
| Granulat 1 [g] | 9,3 | — | 4,65 | — |
| Granulat 2 [g] | — | 9,3 | — | 4,65 |
| $CaSO_4 \cdot 2H_2O$ [g] | 3,2 | 3,2 | 1,6 | 1,6 |
| $CaSO_4$ [Äquivalent-%] | 140 | 140 | 70 | 70 |

Die verwendeten Granulate 1 und 2 wurden aus den in Tabelle 2 angegebenen Komponenten und in den dort angegebenen Mengen nach der in Beispiel 1 beschriebenen Arbeitsweise hergestellt. Die Herstellung der Polyether 1 und 2 ist ebenfalls in Beispiel 1 beschrieben.

*Tabelle 2*

| | Granulat 1 | Granulat 2 |
|---|---|---|
| Polyether 1 (g) | 55 | 52,5 |
| Polyether 2 (g) | 15 | 17,5 |
| $CaSO_4 \cdot 2H_2O$ (g) | 51 | 51 |
| Butandiol-1,4 (g) | 4 | 4 |
| Dibutylzinndilaurat (g) | 0,08 | 0,08 |
| modifiziertes MDI (g) | 23,8 | 23,8 |
| $CaSO_4$/PUR | 1 : 2,5 | 1 : 2,5 |
| WA des PUR (g/100 g) | 35 | 37 |

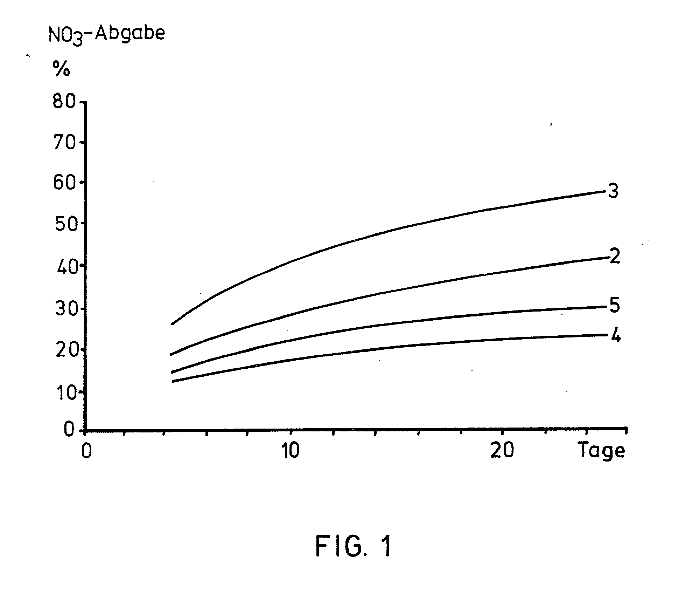

Die so hergestellten Düngemittel unterschiedlicher Zusammensetzung und Wirkungsweise dienen zur Nährstoffversorgung von Pflanzen mit entsprechend unterschiedlichem Nährstoffbedarf. Zur Charakterisierung der Nährstoff-Freisetzung aus den erhaltenen Düngemitteln wurde die Nitratfreisetzung in vollentsalztem Wasser als Funktion der Zeit wie in Beispiel 1 beschrieben untersucht. Die Messergebnisse, ausgedrückt in % der im Ionenaustauscherdünger enthaltenen Nitratmenge, sind aus Figur 1 ersichtlich.

*Beispiel 6*

Eine handelsübliche Kleinpackung (Nährstoffbatterie) mit 11,5 g des in Beispiel 1 beschriebenen nährstoffbeladenen Ionenaustauscherdüngers mit einem Gesamtgehalt an sauren und basischen Gruppen von 45 mmol wird mit einer Polyurethanscheibe 1, die 1,6 g $CaSO_4 \cdot 2H_4O$ (WL bei 20° C : 2,036 g/dm³) enthält, und einer Polyurethanscheibe 2, die 2,3 g $MgSO_4 \cdot 7H_2O$ (WL bei 20° C: 356 g/dm³) enthält, zusammen in ein Gefäss zur Hydrokultur von Einzelpflanzen eingebracht. Die Kombination reicht für die Nährstoffversorgung einer Pflanze (Ficus benjamina) von 35 cm Höhe bei Verwendung von Giesswasser der Gesamthärte 3° d für 6 Monate aus.

Die Polyurethanscheiben 1 und 2 waren nach der in Beispiel 1 beschriebenen Verfahrensweise unter Verwendung der in Tabelle 3 angegebenen Stoffe hergestellt worden.

Die Gewichte der entformten Scheiben sind ebenfalls in der Tabelle 3 aufgeführt.

Der zur Herstellung der Polyurethanscheibe 2 verwendete Polyether 3 war durch Anlagerung von Propylenoxid an Sorbit hergestellt worden und wies eine Hydroxylzahl von 42 auf.

*Tabelle 3*

| Polyurethanscheibe | 1 | 2 |
|---|---|---|
| Polyether 1 (g) | 45 | — |
| Polyether 2 (g) | 25 | — |
| Polyether 3 (g) | — | 70 |
| Butandiol-1,4 (g) | 4 | — |
| Dibutylzinndilaurat (g) | 0,08 | 0,2 |
| modifiziertes MDI (g) | 23,6 | 9,6 |
| $CaSO \cdot 2H_2O$ (g) | 25,3 | — |
| $MgSO_4 \cdot 7H_2O$ (g) | — | 41,7 |
| Mineraldünger (berechnet als Kristallwasser-freies Salz)/PUR | 1 : 5 | 1 : 5,2 |
| WA des PUR (g/100 g) | 52 | 5 |

| Polyurethanscheibe | 1 | 2 |
|---|---|---|
| Mineraldünger (Äquivalent-%) Gewicht der Scheibe (g) | 83 6,8 | 83 13,3 |

*Beispiel 7*

Die gleiche gute Langzeit-Düngewirkung wie mit der in Beispiel 6 beschriebenen Kombination wird auch bei der gemeinsamen Anwendung einer handelsüblichen Kleinpackung mit 11,5 g (entsprechend 45 mmol an sauren und basischen Gruppen) des nährstoffbeladenen Ionenaustauscherdüngers mit einer Polyurethanscheibe, die 2,24 g $CaSO_4 \cdot 2H_2O$ und 0,96 g $MgNH_4PO_4 \cdot 6H_2O$ (WL bei 15°C = 0,06 g/dm³) enthält, erzielt.

Die Polyurethanscheibe wird nach der in Beispiel 1 beschriebenen Verfahrensweise unter Verwendung der nach folgend aufgelisteten Stoffe hergestellt, wobei das entformte Material zu Scheiben zerschnitten wird. Gewicht einer Scheibe: 9,3 g.

| | |
|---|---|
| Polyether 1 | 50 g |
| Polyether 2 | 20 g |
| Butandiol-1,4 | 4 g |
| Dibutylzinndilaurat | 0,08 g |
| modifiziertes MDI | 23,7 g |
| $CaSO \cdot 2H_2O$ | 35,8 g |
| $MgNH_4PO_4 \cdot 6H_2O$ | 15,4 g |
| Mineraldünger (berechnet als Kristallwasser-freies Salzgemisch)/PUR | 1 : 2,7 |
| WA des PUR | 40 g/100 g |
| Mineraldünger (Äquivalent-%) | 170 |

*Beispiel 8*

82 g eines handelsüblichen Ionenaustauscherdüngers für Pflanzen in Erdkulturen (Lewaterr 80®), der alle essentiellen Makro- und Mikronährstoffe mit Ausnahme von Calcium, Magnesium und Schwefel an ein Ionenaustauschergemisch, bestehend aus einem Kationenaustauschharz und einem Anionenaustauschharz, gebunden enthält, mit einem Gesamtgehalt an sauren und basischen Gruppen von 311 meq und 16 g $CaSO \cdot 2H_2O$ = 372 mmol ($\frac{1}{2}Ca^{2+} + \frac{1}{2}SO_4^{2-}$) = 120 Äquivalent-%, werden mit
55 g Polyether 1 gemäss Beispiel 1,
15 g Polyether 2 gemäss Beispiel 1,
  4 g Butandiol-1,4,
  0,08 g Dibutylzinndilaurat und
24 g modifiziertem MDI gemäss Beispiel 1
intensiv vermischt. Das Reaktionsgemisch wird in eine zylindrische Form (Durchmesser 12 cm) gegossen und erhärtet innerhalb von 5 Minuten zu einem hartelastischen Material. Es wird in Scheiben von 2 mm Dicke zerschnitten, deren Gewicht 29 g beträgt. (Verhältnis Feststoff/Polyurethan in der Scheibe 1:1; WA des Polyurethans: 35 g/100 g Polyurethan.)

Die so hergestellten Düngescheiben werden als Unterlegplatten bei Topfpflanzen verwendet, die mit weichem, salzarmem Wasser gegossen werden. Mit Hilfe dieser Scheiben ist auch bei weichem, salzarmem Giesswasser eine gesunde Entwicklung von normal grossen Pflanzen für 3-6 Monate sichergestellt.

Wird zur Herstellung der Düngescheiben statt der vorstehend angegebenen Menge an Polyurethan bzw. Polyurethan bildenden Verbindungen die 4-fache Menge eingesetzt und die Düngescheiben, in denen das Verhältnis Feststoff/Polyurethan dann 1:4 beträgt, auf eine Dicke von 4,9 mm, entsprechend einem Gewicht von 70,5 g, geschnitten, so erhält man Düngescheiben, die sich besonders für die Versorgung langsam wachsender Pflanzen eignen. Eine Scheibe dieser Art gewährleistet bei einer langsam wüchsigen Pflanze in Erdkultur auch bei Verwendung von weichem Giesswasser die Nährstoffversorgung für mehr als 6 Monate.

*Beispiel 9*

83,9 g des in Beispiel 8 beschriebenen, im Wärmeschrank getrockneten handelsüblichen Ionenaustauscherdüngers, 11,4 g $CaSO_4 \cdot 2H_2O$ und 6,9 g $MgSO_4$ (enthaltend 25 Gew.-% Kristallwasser) werden in einer Mischung aus 58 g Polyether 1 gemäss Beispiel 1, 12 g Polyether 2 gemäss Beispiel 1 und 4 g Butandiol-1,4 dispergiert. Die Dispersion wird zunächst mit 0,08 g Dibutylzinndilaurat, dann mit dem in Beispiel 1 beschriebenen modifizierten 4,4'-Diisocynanatodiphenylmethan (MDI) versetzt und intensiv gerührt. Das Reaktionsgemisch wird, wie in Beispiel 8 beschrieben, zu einem kompakten Zylinder ausgehärtet. Dieser wird in Scheiben von 2 mm Dicke (Scheibengewicht: 29 g) zerschnitten.

Jede der so erhaltenen Scheiben enthält 12,15 g des angegegebenen handelsüblichen Ionenaustauscherdüngers, 1,65 g $CaSO_4 \cdot 2H_2O$, 1,0 g $MgSO_4$ (enthaltend 25 Gew.-% Kristallwasser) und 14,2 g Polyurethan. Das Verhältnis wasserfreier Düngemittel/Polyurethan beträgt 1:1.

Verwendet man die auf diese Weise hergestellten Düngerscheiben als Unterlagen für die Töpfe von Pflanzen in Erdkulturen, so wird selbst bei der Verwendung von weichem salzarmen Giesswasser die Nährstoffversorgung der Pflanzen für 4 bis 6 Monate sichergestellt.

*Beispiel 10*

Eine handelsübliche Nährstoffbatterie enthaltend 13,5 g des in Beispiel 1 beschriebenen Ionenaustauscherdüngers (Gesamtgehalt an sauren und basischen Gruppen: 53 mmol) wurde zusammen mit einer Polyurethanplatte 1, die 1,9 g $CaSO_4 \cdot H_2O$ enthielt, und einer Polyurethanplatte 2, die 1 g $MgSO_4 \cdot H_2O$ enthielt, in das Wasserreservoir eines handelsüblichen Hydrokulturgefässes für Einzelpflanzen eingebracht. Der Kulturtopf, der Blähton als Pflanzensubstrat enthielt, war mit einer rankenden Grünpflanze, Ficus pomila, bepflanzt.

Der nachstehend bechriebene Vegetationsversuch wurde mit insgesamt 3 der in der vorstehenden Weise vorbereiteten Ficus-pomila-Hydrokulturen durchgeführt. Für den Vegetationsversuch wurde als Giesswasser ein weiches salzarmes Trinkwasser (Gesamthärte: 1,4° dH; spezifische Leitfähigkeit: 100 μ S/cm bei 20° C) verwendet. Die Versuchsdauer (Kulturzeit) betrug 4 Monate. Nach Abschluss des Versuchs wurden die Pflanzen nach allgemeinen gärtnerischen Gesichtspunkten (Qualität, Blattfarbe und Habitus) bonitiert und der Zuwachs (Gewicht der abgeschnittenen Ranken) festgestellt. Es wurden folgende Mittelwerte je Pflanze erhalten:

Allgemeine Bonitierung: 1,25 (entspricht einer sehr guten Pflanzenqualität in einer Werteskala von 1 (bester Wert) bis 5)

Blattfarbe: grün bis dunkelgrün
Wachstum: starker Austrieb
Zuwachs: 41 g (Frischgewicht)

D.h., bei dem Wachstumsversuch wurde trotz Verwendung des sehr weichen Giesswassers ein sehr gutes Kulturergebnis erzielt.

Für die Herstellung der Polyurethanplatten 1 und 2 wurden die in der nachstehenden Tabelle 4 aufgeführten Stoffe in der in Beispiel 1 beschriebenen Reihenfolge gemischt. Das Reaktionsgemisch wurde auf eine nicht haftende (Teflon)unterlage ausgegossen und zu einer 2 mm starken Schicht ausgezogen. Nach der Aushärtung wurden aus den so erhaltenen Polyurethanplatten Stücke der in Tabelle 4 angegebenen Abmessungen ausgeschnitten.

*Tabelle 4*

| Polyurethanplatten | 1 | 2 |
|---|---|---|
| Polyether 1 (g) | 52,5 | 70 |
| Polyether 2 (g) | 17,5 | — |
| Butandiol-1,4 (g) | 4 | 4 |
| Dibutylzinndilaurat (g) | 0,08 | 0,08 |
| modifiziertes MDI (g) | 23,8 | 24,2 |
| $CaSO_4 \cdot 2H_2O$ (g) | 31 | — |
| $MgSO_4 \cdot H_2O$ (g) | — | 31 |
| Mineraldünger (Kristallwasser-freies Salz)/PUR | 1:4 | 1:3,6 |
| WA des PUR (g/100 g) | 37 | 5 |
| Stückgewicht (g) | 7,9 | 4,2 |
| Stückmasse (cm) | 10×5×0,2 | 5×4×0,2 |

Gehalt an $CaSO_4 \cdot 2H_2O$ je PUR-Platte 1 : 1,9 g = 44,2 mmol ($\frac{1}{2}Ca^{++} + \frac{1}{2}SO_4^{--}$)

Gehalt an $MgSO_4 \cdot H_2O$ je PUR-Platte 2 : 1,0 g = 29,3 mmol ($\frac{1}{2}Mg^{++} + \frac{1}{2}SO_4^{--}$)

Gesamtmenge an Mineraldünger [Äquivalent-% bezogen auf die Gesamtmenge an sauren und basischen Gruppen des eingesetzten Ionenaustauscher-Düngers]: 139.

*Beispiel 11*

60 g des in Beispiel 8 beschriebenen Ionenaustauscherdüngers für Erdkulturen (Gesamtgehalt an sauren und basischen Gruppen: 227 mmol), 21,6 g granuliertes, Polyurethan-umhülltes Calciumsulfat (Polyurethan-Granulat 1) und 12,2 g granuliertes, Polyurethan-umhülltes Magnesiumsulfat (Polyurethangranulat 2) wurden auf den Zwischenboden eines handelsüblichen Blumenkastens mit Wasserreservoir (Abmessungen: 65×19×19 cm) gestreut. In den Blumenkasten wurden 3 Topfpflanzen (Pelargonium-Zonale-Hybriden der Sorte «Rubin») mit ihren Erdballen eingebracht. Der Kasten wurde mit einem Pflanzensubstrat bestehend aus einer Mischung aus 4 Teilen Blähton und einem Teil Steinwolle aufgefüllt.

Die Polyurethangranulate (1) und (2) waren nach der in Beispiel 1 beschriebenen Verfahrensweise unter Verwendung der in Tabelle 5 angegebenen Stoffe hergestellt worden.

Der Vegetationsversuch wurde mit insgesamt 4 der in der vorstehend beschriebenen Weise vorbereiteten Blumenkästen ausgeführt. Als Giesswasser wurde ein weiches, salzarmes Trinkwasser (Gesamthärte: 1,4° dH; spezifische Leitfähigkeit: 100 μ S/cm bei 20° C) verwendet. Die Versuchsdauer (Kulturzeit) betrug 4 Monate. In dieser Zeit fiel ein mittlerer Ertrag von 26 Blütendolden je Pflanze an und nach Versuchsende betrug das mittlere Sprossgewicht je Pflanze 204 g Frischsubstanz, d.h. bei dem Wachstumsversuch wurde trotz Verwendung eines sehr weichen Giesswassers ein gutes Kulturergebnis erzielt.

*(Tabelle auf der nächsten Seite)*

Gehalt an $CaSO_4 \cdot 2H_2O$ in 21,6 g Granulat (1): 7,4 g = 172 mmol ($\frac{1}{2}Ca^{++} + \frac{1}{2}SO_4^{--}$)

Gehalt an $MgSO_4$ (100%) in 12,2 g Granulat (2): 3,15 g = 105 mmol ($\frac{1}{2}Mg^{++} + \frac{1}{2}SO_4^{--}$)

Gesamtmenge an Mineraldünger [Äquivalent-% bezogen auf die Gesamtmenge an sauren und basischen Gruppen des eingesetzten Ionenaustauscherdüngers]: 122.

*Tabelle 5*

| Polyurethangranulat | 1 | 2 |
|---|---|---|
| Polyether 1 (g) | 55 | 70 |
| Polyether 2 (g) | 15 | — |
| Butandiol-1,4 (g) | 4 | 4 |
| Dibutylzinndilaurat (g) | 0,08 | 0,08 |
| modifiziertes MDI (g) | 23,8 | 24,18 |
| $CaSO_4 \cdot 2H_2O$ (g) | 51 | — |
| $MgSO_4$ (Kristallwassergehalt: 25%) (g) | — | 51,5 |
| Mineraldünger (Kristallwasser-freies Salz)/PUR | 1 : 2,5 | 1 : 2,5 |
| WA des PUR (g/100 g) | 35 | 5 |

**Patentansprüche**

1. Verfahren zur langfristigen und gleichmässigen Versorgung von Pflanzen mit Nährstoffen durch Zugabe von nährstoffbeladenen Kunstharz-Ionenaustauschern und Mineraldüngern zum Kulturmedium, dadurch gekennzeichnet, dass man die nährstoffbeladenen Kunstharz-Ionenaustauscher gemeinsam mit Mineraldüngern einer Korngrösse < 500 µm einsetzt, die mit massiven Polyurethanen eines bestimmten, auf die Wasserlöslichkeit (WL) des Mineraldüngers in folgender Weise abgestimmten Wasseraufnahmevermögens (WA) umhüllt wurden:

Für Mineraldünger einer WL (20° C) < 3 g/l werden Polyurethane eines WA 25-60 g Wasser/100 g Polyurethan verwendet,

für Mineraldünger einer WL (20° C) > 3 g/l Polyurethane eines WA 0,5-30 g Wasser/100 g Polyurethan.

2. Verfahren gemäss Anspruch 1, dadurch gekennzeichnet, dass das Wasseraufnahmevermögen (WA) der zum Umhüllen des Mineraldüngers zu verwendenden massiven Polyurethane in folgender Weise auf die Wasserlöslichkeit (WL) des Mineraldüngers abgestimmt ist:

Für Mineraldünger einer WL (20° C) < 3 g/l werden Polyurethane eines WA 30-50 g Wasser/100 g Polyurethan verwendet,

für Mineraldünger einer WL (20° C) > 3 g/l Polyurethane eines WA 0,5-20 g Wasser/100 g Polyurethan.

3. Verfahren gemäss Ansprüchen 1 und 2, dadurch gekennzeichnet, dass der Mineraldünger von einer solchen Menge massiven Polyurethans des bestimmten Wasseraufnahmevermögens umhüllt ist, dass das Gewichtsverhältnis Mineraldünger/Polyurethan 1 : 9 bis 1 : 0,25 beträgt.

4. Verfahren gemäss Ansprüchen 1 bis 3, dadurch gekennzeichnet, dass nährstoffbeladene Kunstharz-Ionenaustauscher und mit den Polyurethanen des bestimmten Wasseraufnahmevermögens umhüllte Mineraldünger in solchen Mengenverhältnissen eingesetzt werden, dass die Menge an Mineraldünger 25 bis 300 Äquivalent-%, bezogen auf die Summe an sauren und basischen Gruppen in den nährstoffbeladenen Kunstharz-Ionenaustauschern beträgt.

5. Verfahren gemäss Ansprüchen 1 bis 4, dadurch gekennzeichnet, dass die nährstoffbeladenen Kunstharz-Ionenaustauscher und die mit den massiven Polyurethanen des bestimmten Wasseraufnahmevermögens umhüllten Mineraldünger in Form von Mischungen eingesetzt werden, die dadurch erhalten worden sind, dass man nährstoffbeladene Ionenaustauscher und Mineraldünger gemeinsam mit den massiven Polyurethanen des bestimmten Wasseraufnahmevermögens umhüllt hat.

6. Verfahren gemäss Ansprüchen 1 bis 5 zur langfristigen und gleichmässigen Versorgung von Pflanzen in Hydrokulturen.

7. Düngemittel zur langfristigen und gleichmässigen Versorgung von Pflanzen mit Nährstoffen, enthaltend Mischungen aus nährstoffbeladenen Kunstharz-Ionenaustauschern und Mineraldüngern einer Korngrösse <500 µm, wobei die Mineraldünger mit massiven Polyurethanen eines bestimmten, auf die Wasserlöslichkeit (WL) des Mineraldüngers in folgender Weise abgestimmten Wasseraufnahmevermögens (WA) umhüllt wurden:

Für Mineraldünger einer WL (20° C) < 3 g/l werden Polyurethane eines WA 25-60 g Wasser/100 g Polyurethan verwendet,

für Mineraldünger einer WL (20° C) > 3 g/l Polyurethane eines WA 0,5-30 g Wasser/100 g Polyurethan.

8. Düngemittel gemäss Anspruch 7, dadurch gekennzeichnet, dass die Mischungen durch gemeinsames Umhüllen von nährstoffbeladenen Kunstharz-Ionenaustauschern und Mineraldüngern mit den massiven Polyurethanen des bestimmten Wasseraufnahmevermögens hergestellt wurden.

9. Düngemittel gemäss Ansprüchen 7 und 8, dadurch gekennzeichnet, dass in ihnen die Menge an Mineraldünger 25 bis 300 Äquivalentprozent, bezogen auf die Summe an sauren und basischen Gruppen der in ihnen enthaltenen nährstoffbeladenen Kunstharz-Ionenaustauscher, beträgt.

10. Düngemittel gemäss Ansprüchen 7 bis 9, dadurch gekennzeichnet, dass das Gewichtsverhältnis umhüllte Feststoffe/Polyurethan 1 : 0,5 bis 1 : 6 beträgt.

## Claims

1. Process for supplying plants with nutrients uniformly and over a long period of time by the addition of nutrient-charged synthetic resin ion exchangers and mineral fertilisers to the culture medium, characterised in that the nutrient-charged synthetic resin ion exchangers are employed together with mineral fertilisers which have a particle size < 500 μm and have been coated with massive polyurethanes having a particular water-absorbing capacity (WA) which is adapted to the water solubility (WS) of the mineral fertiliser in the following manner:

for mineral fertilisers of a WS (20° C) < 3 g/l polyurethanes of a WA 25-60 g of water/100 g of polyurethane are used;

for mineral fertilisers of a WS (20° C) > 3 g/l polyurethanes of a WA 0.5-30 g of water/100 g of polyurethane are used.

2. Process according to Claim 1, characterised in that the water-absorbing capacity (WA) of the massive polyurethanes to be used for coating the mineral fertiliser is adapted to the water solubility (WS) of the mineral fertiliser in the following manner:

for mineral fertilisers of a WS (20° C) < 3 g/l polyurethanes of a WA 30-50 g of water/100 g of polyurethane are used;

for mineral fertilisers of a WS (20° C) > 3 g/l polyurethanes of a WA 0.5-20 g of water/100 g of polyurethane are used.

3. Process according to Claims 1 and 2, characterised in that the mineral fertiliser is coated with such an amount of a massive polyurethane having a particular water-absorbing capacity that the weight ratio of mineral fertiliser/polyurethane is 1 : 9 to 1 : 0.25.

4. Process according to Claims 1 to 3, characterised in that nutrient-charged synthetic resin ion exchangers and mineral fertilisers coated with the polyurethanes having a particular water-absorbing capacity, are employed in such proportions that the amount of mineral fertilisers is 25 to 300 equivalent %, relative to the sum of acidic and basic groups in the nutrient-charged synthetic resin ion exchangers.

5. Process according to Claims 1 to 4, characterised in that the nutrient-charged synthetic resin ion exchangers and the mineral fertilisers coated with the massive polyurethanes having a particular water-absorbing capacity, are employed in the form of mixtures which have been obtained by jointly coating nutrient-charged ion exchangers and mineral fertilisers with the massive polyurethanes having a particular water-absorbing capacity.

6. Process according to Claims 1 to 5 for long-term and uniform feeding of plants in water cultures.

7. Fertilisers for supplying plants with nutrients uniformly and over a long period of time, containing mixtures of nutrient-charged synthetic resin ion exchangers and mineral fertilisers having a particle size < 500 μm, wherein the mineral fertilisers have been coated with massive polyurethanes having a particular water-absorbing capacity (WA) which is adapted to the water solubility (WS) of the mineral fertiliser in the following manner:

for mineral fertilisers of a WS (20° C) < 3 g/l polyurethanes of a WA 25-60 g of water/100 g of polyurethane are used;

for mineral fertilisers of a WS (20° C) > 3 g/l polyurethanes of a WA 0.5-30 g of water/100 g of polyurethane are used.

8. Fertilisers according to Claim 7, characterised in that the mixtures have been prepared by jointly coating nutrient-charged synthetic resin ion exchangers and mineral fertilisers with the massive polyurethanes having a particular water-absorbing capacity.

9. Fertilisers according to Claims 7 and 8, characterised in that the amount of mineral fertiliser in them is 25 to 300 equivalent %, relative to the sum of acidic and basic groups of the nutrient-charged synthetic resin ion exchangers contained in them.

10. Fertilisers according to Claims 7 to 9, characterised in that the weight ratio coated solids/polyurethane is 1 : 0.5 to 1 : 6.

## Revendications

1. Procédé pour fournir sur une longue durée et régulièrement aux plantes des substances nutritives par addition de résines synthétiques d'échange d'ions, chargées de substances nutritives et d'engrais minéraux à un milieu de culture, procédé caractérisé en ce qu'on utilise la résine synthétique échangeuse d'ions, chargée de substances nutritives, avec des engrais minéraux ayant une grosseur de grain < 500 μm, qui ont été enrobés par des polyuréthannes massifs ayant un pouvoir déterminé d'absption d'eau (PA) relié de la façon suivante à la solubilité dans l'eau (SE) de l'engrais minéral :

pour de l'engrais minéral ayant une SE (à 20° C) < 3 g/l, on utilise des polyuréthannes ayant un PA de 25 à 60 g d'eau/100 g de polyuréthanne,

pour de l'engrais minéral ayant une SE (à 20° C) > 3 g/l de polyuréthanne, on utilise un PA de 0,5 à 30 g d'eau/100 g de polyuréthanne.

2. Procédé selon la revendication 1, caractérisé en ce que le pouvoir d'absorption d'eau (PA) des polyuréthannes massifs à utiliser pour enrober l'engrais minéral est relié de la façon suivante à la solubilité dans l'eau (S) de l'engrais minéral :

pour de l'engrais minéral ayant une SE (à 20° C) < 3 g/l, on utilise des polyuréthannes ayant un PA de 30 à 50 g d'eau/100 g de polyuréthanne,

pour de l'engrais minéral ayant une SE (à 20° C) > 3 g/l, on utilise des polyuréthannes ayant un PA de 0,5 à 20 g d'eau/100 g de polyuréthanne.

3. Procédé selon les revendications 1 et 2, caractérisé en ce que l'engrais minéral est enrobé par une quantité de polyuréthannes massifs présentant le pouvoir déterminé d'absorption d'eau telle que le rapport pondéral engrais minéral/polyuréthanne se situe entre 1 : 9 et 1 : 0,25.

4. Procédé selon les revendications 1 à 3, caractérisé en ce qu'on utilise de la résine synthétique échangeuse d'ions, chargée de substances nutritives et de l'engrais minéral enrobé par les polyuréthanes ayant le pouvoir déterminé d'absorption d'eau, en des rapports entre quantités tels que la quantité de l'engrais minéral représente 25 à 300 équivalents %, par rapport à la somme des groupes acides et basiques présents dans la résine synthétique échangeuse d'ions et chargée de substances nutritives.

5. Procédé selon les revendications 1 à 4, caractérisé en ce qu'on utilise la résine synthétique échangeuse d'ions, chargée de substances nutritives, et l'engrais minéral enrobé par les polyuréthannes massifs ayant le pouvoir déterminé d'absorption d'eau, sous forme de mélanges qui ont été obtenus en enrobant l'échangeur d'ions, chargé de substances nutritives, et l'engrais minéral ensemble à l'aide des polyuréthannes massifs ayant le pouvoir déterminé d'absorption d'eau.

6. Procédé selon les revendications 1 à 5 pour alimenter sur une longue durée et régulièrement des plantes en hydrocultures.

7. Engrais pour alimenter sur une longue durée et régulièrement des plantes en des substances nutritives, contenant des mélanges de résines synthétiques échangeuses d'ions chargées de substances nutritives et d'engrais minéraux ayant une grosseur de grain < 500 µm, les engrais minéraux ayant été enrobés par des polyuréthannes massifs présentant un pouvoir déterminé d'absorption d'eau (PA) relié de la façon suivante à la solubilité dans l'eau (SE) de l'engrais minéral:

pour de l'engrais minéral ayant une SE (à 20° C) < 3 g/l, on utilise des polyuréthannes ayant un PA de 25 à 60 g d'eau/100 g de polyuréthanne,

pour de l'engrais minéral ayant une SE (à 20° C) > 3 g/l, on utilise des polyuréthannes ayant un PA de 0,5 à 30 g d'eau/100 g de polyuréthanne.

8. Engrais selon la revendication 7, caractérisé en ce que les mélanges ont été préparés par enrobage ensemble de résines synthétiques échangeuses d'ions chargées de substances nutritives et d'engrais minéraux par des polyuréthannes massifs présentant le pouvoir déterminé d'absorption d'eau.

9. Engrais selon les revendications 7 et 8, caractérisé en ce que la quantité d'engrais minéral qu'il contient représente 25 à 300 équivalents %, par rapport à la somme des groupes acides et basiques des résines synthétiques échangeuses d'ions chargées de substances nutritives, contenues dans cet engrais.

10. Engrais selon les revendications 7 à 9, caractérisé en ce que le rapport pondéral solides enrobés/polyuréthanne se situe entre 1 : 0,5 et 1 : 6.

FIG. 1